# EUROPEAN PATENT APPLICATION

(11) **EP 2 487 747 A2**
(43) Date of publication of application: **15.08.2012**
(21) Application number: 10822232.4
(22) Date of filing: 06.10.2010
(51) Int. Cl.: H01M 10/38

(54) **ELECTRODE ASSEMBLY FOR A BATTERY AND METHOD FOR MANUFACTURING SAME**

(30) Priority: 07.10.2009 KR 20090095349
(71) Applicant: SK Innovation Co., Ltd., Jongro-gu Seoul 110-110 (KR)
(72) Inventor: KIM, Joo Wan, Asan-si Chungcheongnam-do 336-852 (KR); KIM, Jong Hwan, Daejeon 302-120 (KR)
(74) Representative: Stolmár Scheele & Partner
(86) International application number: PCT/KR2010/006826
(87) International publication number: WO 2011/043587

(57) **Abstract**

The present invention relates to an electrode assembly in which a positive electrode plate and a negative electrode plate are alternately laminated into a layer in one or two directions with a separator interposed therebetween. The present invention also relates to a method for manufacturing the electrode assembly. The present invention provides an electrode assembly for a battery and a method for manufacturing same, wherein both ends or a lower end of a current collector of the positive electrode plate are exposed to form a stepped portion between the ends of the positive electrode plate and a film layer and thus form a positive electrode plate stepped portion, and an adhesive is applied to the thus-formed positive electrode plate stepped portion such that the positive electrode plate stepped portion is attached to the separator, to thereby prevent an increase in the thickness of a battery and to thus enable easy assembly during the manufacture of the battery. Further, a negative electrode plate stepped portion is also formed in a current collector of the negative electrode plate, thus effectively preventing an increase in the thickness of the battery from increasing by an accumulated adhesive during the manufacture of the battery. Consequently, the performance of the battery is prevented from being degraded by the application of the adhesive, and wettability with an electrolyte can be maintained.

## Description

### [Technical Field]

The present invention relates to an electrode assembly for a battery and a method of manufacturing the same, and particularly to an electrode assembly in which a positive electrode plate and a negative electrode plate are alternately laminated into a layer in one or two directions with a separator interposed therebetween, and a method for manufacturing the same.

### [Background Art]

In recent, various types of portable electronic devices using electric energy has been developed, and electric cars classified as eco-friendly cars has been in the limelight. With respect to performance improvement of the portable electronic devices and eco-friendly cars, performances of batteries that store and supply electric energy are becoming important issues. Particularly, among batteries used in these devices, lithium secondary batteries that have a long lifespan and excellent energy density per unit weight have received attention.

These lithium secondary batteries are divided into lithium ion batteries using liquid electrolyte and lithium polymer batteries using polymer electrolyte according to the kind of electrolyte. Between them, the lithium polymer batteries have relatively excellent battery stability and the degree of shape freedom, and have a structure in which a thin porous polymer separator is positioned between positive and negative electrodes and an active material is applied to current collectors of the positive and negative electrodes.

The separator is an insulating thin film having high mechanical strength and ion permeability, and prevents an electric short between the positive electrode and the negative electrode and functions as a route for insertion and secession of Li ions. A material for this separator may be polyethylene and polypropylene, which are main components, a mixed form thereof, or a non-woven fabric.

In addition, materials having high conductivity are respectively used for current collectors for the positive electrode and the negative electrode, and they are used differentially from each other, considering solubility of materials by electrochemical sub-reaction. As types of commercialized general materials, aluminum is used for the positive electrode and copper or the like is used for the negative electrode. The punched (or cut) positive electrode plates and negative electrode plates are laminated together with the constituents of the lithium secondary battery, to manufacture the battery.

That is to say, the lithium secondary battery conventionally consists of an electrode assembly in which a positive electrode plate coated with a positive electrode active material (hereinafter, a positive electrode plate), a negative electrode coated with a negative active material (hereinafter, a negative electrode plate), and a separator positioned between the positive electrode plate and the negative electrode plate are alternately laminated, a case for a lithium secondary battery that receives the electrode assembly, and an electrolyte injected inside the case for a lithium secondary battery to allow movement of lithium ions.

This electrode assembly for a lithium secondary battery may be manufactured by alternately laminating positive and negative electrodes, which are punched (or cut) in a predetermined size, with separators interposed therebetween, in a zigzag type by the desired capacitance, or by winding positive and negative electrodes that are prepared to have a length suitable for designed capacitance, with a separator interposed therebetween, using a central core, in a winding type.

In addition, the thus manufactured electrode assembly is put in the case for a lithium secondary battery such that the electrode assembly is not separated therefrom. Then, the electrolyte is injected in the case for lithium secondary battery and then sealed, thereby completing the lithium secondary battery.

However, in the case where the existing electrode assembly is manufactured by zigzag-type lamination, the positive electrode and the negative electrode are simply contacted with each other, and thus, the positive electrode and the negative electrode move on the separator at the time of lamination, resulting in degradation in assembling efficiency.

In order to solve this, an adhesive is applied to a positive electrode plate and a negative electrode plate that are punched (or cut) in a predetermined size, and then these are attached to the separator, thereby to manufacture an electrode assembly for a battery in a folding type, so that the positive electrode plate and the negative electrode plate are not moved at the time of manufacture of the battery, resulting in improvement in assembling efficiency of the electrode assembly. However, in this case, charging and discharging do not occur at a portion to which the adhesive is applied, and thus causing a reduction in capacitance. Furthermore, the portion of the adhesive accumulates when the positive electrode plate and the negative electrode plate are laminated, and thus causing an increase in thickness of the electrode assembly and the battery.

Meanwhile, there is an existing technology of manufacturing an electrode assembly for a battery, by coating a surface of the separator with polymer, disposing a positive electrode plate and a negative electrode plate above two separators (hereinafter, referred to as a first separator and a second separator, respectively) at a predetermined interval, followed by lamination, attaching the positive electrode plate to the first separator and the negative electrode plate to the second separator, and then winding the first and second separators, the positive electrode plate, and the negative electrode plate, together, by using a core.

This technology enabled the electrode assembly to be manufactured in a winding type lamination manner, by preventing the positive electrode plate and the negative electrode plate from being moved on the separator, and thus, improves productivity of the battery. However, wettability with the electrolyte and performance of the battery may be degraded, which is caused by coating polymer on the separator.

### [Technical Problem]

An object of the present invention is to provide an electrode assembly and a method for manufacturing the electrode assembly, capable of preventing an increase in thickness of a battery and enabling easy assembly at the time of manufacturing the battery, by exposing both ends or a lower end of a current collector of the positive electrode plate to form a positive electrode plate stepped portion, and applying an adhesive to the positive electrode plate stepped portion such that the positive electrode plate stepped portion is attached to the separator.

### [Technical Solution]

In one general aspect, there is provided an electrode assembly for a battery, the electrode assembly including: a plurality of positive electrode plates 100 each having a positive electrode plate stepped portion 111, which is formed by exposing a positive electrode plate current collector 110 to have a stepped portion from a positive electrode plate coating layer 120; a plurality of negative electrode plates 200; a first separator 310 for arranging and fixing the plurality of positive electrode plates 100, where an adhesive is applied to the positive electrode plate stepped portions 111, thereon, the positive electrode plates 100 being spaced apart from each other; and a second separator 320 for arranging and fixing the plurality of negative electrode plates 200 thereon, the negative electrode plates 200 being spaced apart from each other, wherein the first separator 310 and the second separator 320 are wound in one direction while they overlap each other above and below, so that the negative electrode plates 200 and the positive electrode plates 100 are alternately laminated with the separators 310 and 320 each interposed therebetween.

In another general aspect, there is provided a method for manufacturing an electrode assembly for a battery, the method including: providing a plurality of positive electrode plates 100 each having a positive electrode plate stepped portion 111, which is formed by exposing a portion of a positive electrode plate current collector 110 to have a stepped portion from a positive electrode plate coating layer 120; providing a plurality of negative electrode plates 200; fixing the plurality of positive electrode plates 100 onto a first separator 310 while the positive electrode plates 100 are arranged to be spaced apart from each other; fixing the plurality of negative electrode plates 200 onto a second separator 320 while the negative electrode plates 200 are arranged to be spaced apart from each other; and winding the first separator 310 and the second separator 320 in one direction while they overlap each other above and below, to alternately laminate the negative electrode plates 200 and the positive electrode plates 100, wherein an adhesive is applied to the positive electrode plate stepped portion 111, and thereby to prevent an increase in thickness of the battery.

### [Advantageous Effects]

According to the present invention, the adhesive is applied to the positive electrode plate stepped portion formed at the positive electrode plate current collector to fix the positive electrode plate to the separator, thereby preventing an increase in thickness of the battery due to an accumulation of the adhesive and enabling easy assembly at the time of manufacturing the battery.

Further, the negative electrode plate stepped portion is also formed at the negative electrode plate current collector, thereby effectively preventing an increase in thickness of the battery due to an accumulation of the adhesive.

Therefore, since an interference by the adhesive does not occur on the coating layers on which charging and discharging are realized, and thus, the performance of the battery is prevented from being degraded by the application of the adhesive, and the performance thereof is maintained and wettability with an electrolyte can be maintained itself.

Further, the electrode assembly is manufactured in a winding type according to the present invention, thereby simplifying the manufacturing process, and thus, productivity of the products can be improved.

### [Description of Drawings]

The above and other objects, features and advantages of the present invention will become apparent from the following description of preferred embodiments given in conjunction with the accompanying drawings, in which:
FIG. 1 is a perspective view showing an embodiment of a positive electrode plate according to the present invention;
FIGS. 2 to 7 are exemplified views showing various combinations of a positive electrode plate and a negative electrode plate according to the present invention;
FIGS. 8 to 10 are perspective views schematically showing a procedure for manufacturing an electrode assembly for a battery according to the present invention in a winding type; and
FIG. 11 is a perspective view showing an electrode assembly manufactured by laminating separators in a zigzag type.

### [Detailed Description of Main Elements]

100: positive electrode plate
110: positive electrode current collector
111: positive electrode plate stepped portion
111a: upper positive electrode plate stepped portion
111b: lower positive electrode plate stepped portion
120: positive electrode plate coating layer
200: negative electrode plate
210: negative electrode plate current collector
211: negative electrode plate stepped portion
211a: upper negative electrode plate stepped portion
211b: lower negative electrode plate stepped portion
220: negative electrode plate coating layer
310: first separator
320: second separator
330: separator
400: fixing member

### [Best Mode]

The terms used in the specification are used to describe only specific embodiments and are not intended to limit the present invention. Singular forms are intended to include plural forms unless the context clearly indicates otherwise.

A plurality of embodiments of the present invention may be present, and the descriptions of the parts overlapping the prior art will be omitted.

Hereinafter, the present invention will be described in detail with reference to preferred embodiments.

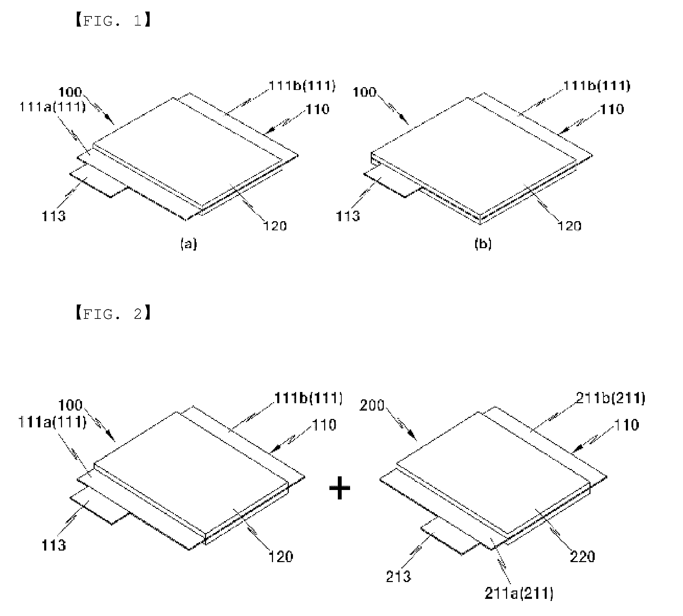

FIG. 1 is a perspective view showing an embodiment of a positive electrode plate according to the present invention; and FIGS. 2 to 7 are exemplified views showing various combinations of a positive electrode plate and a negative electrode plate according to the present invention.

The present invention relates to an electrode assembly for a battery, in which positive electrode plates 100 and negative electrode plates 200 are alternately laminated while separators 310, 320, and 330 each are disposed therebetween, and a method for manufacturing the same, and provides an electrode assembly for a battery, capable of performing lamination by fixing the electrodes 100 and 200 to the separators through application of an adhesive (or polymer) and winding the separators 310, 320, and 330 in one or two directions without an increase in thickness of the battery due to the adhesive at the time of manufacture of the battery.

For achieving this, according to the present invention, as shown in FIG. 1, a portion of the positive electrode plate current collector 110 to which the adhesive is to be applied is exposed to form a positive electrode plate stepped portion 111, and the adhesive is applied to the thus-formed positive electrode plate stepped portion 111 such that the positive electrode plate stepped portion 111 is attached to the separator (a first separator) 310, to thereby manufacturing a battery in a winding type like the existing small-sized battery.

More specifically, the positive electrode plate 100 generally consists of the positive electrode current collector 110 having a positive electrode tap bonding portion 113 and positive electrode coating layers 120 laminated on both surfaces of the positive electrode current collector 110. As shown in (a) of FIG. 1, both ends of each of upper and lower portions of the positive electrode plate current collector 110 are exposed to form the positive electrode plate stepped portions 111, thereby forming a stepped portion between the positive electrode plate current collector 110 and the positive electrode plate coating layer 120.

Then, the positive electrode plates 100 each having the positive electrode plate stepped portion 111, that is, an upper positive electrode plate stepped portion 111a and a lower positive electrode plate stepped portion 111b to which the adhesive is applied, are attached and fixed onto the first separator 310 at a predetermined interval.

Alternatively, as shown in (b) of FIG. 1, only a lower end of the positive electrode plate current collector 110 is exposed to form a lower positive electrode plate stepped portion 111b, and the adhesive is applied on the lower positive electrode stepped portion 111b and a positive electrode tap boning portion 113. Then, a bonding surface (a portion to which the adhesive is applied) of the positive electrode plate 100 may meet and be attached to the first separator 310, so that the positive electrode plate 100 is attached and fixed to the first separator 310 while they are maintained at a predetermined interval.

Charging and discharging substantially occur on the coating layers 120 and 220 of the electrode plates 100 and 200. When foreign substances are covered with the positive electrode plate coating layer 120 between them, performance of the battery may be degraded due to an interference of the foreign substances. Hence, the adhesive may be applied to the positive electrode plate stepped portion 111, the positive electrode tap bonding portion 113, or the like, so as to prevent degradation in performance of the battery and improve assembling efficiency of the battery.

Also, the adhesive is applied to portions of the positive electrode plate 100, each having a stepped portion from the positive electrode plate coating layer 120, that is to say, the positive electrode plate stepped portion 111 and the positive electrode tap bonding portion 113, to prevent an increase in thickness of the battery due to the adhesive at the time of manufacture of the battery.

Meanwhile, in the electrode assembly for a battery, the negative electrode plate 200 is alternately laminated with the positive electrode plate 100 with each of the separators 310 and 320 therebetween, to constitute one pair. In the present invention, the adhesive is also applied to the negative electrode plate 200 and then the thus obtained negative electrode plate is fixed to the separator (a second separator) 320.

In the case of the negative electrode plate in the electrode assembly for a battery, an interference by foreign substances such as the adhesive or the like does not occur. Thus, it is possible to apply the adhesive on the negative electrode plate coating layer 220 without forming the negative electrode stepped portion 211 to fix the negative electrode plate to the separator 320. The thickness of the adhesive coated on the negative electrode plate coating layer 220 may be offset by the positive electrode plate stepped portion 111.

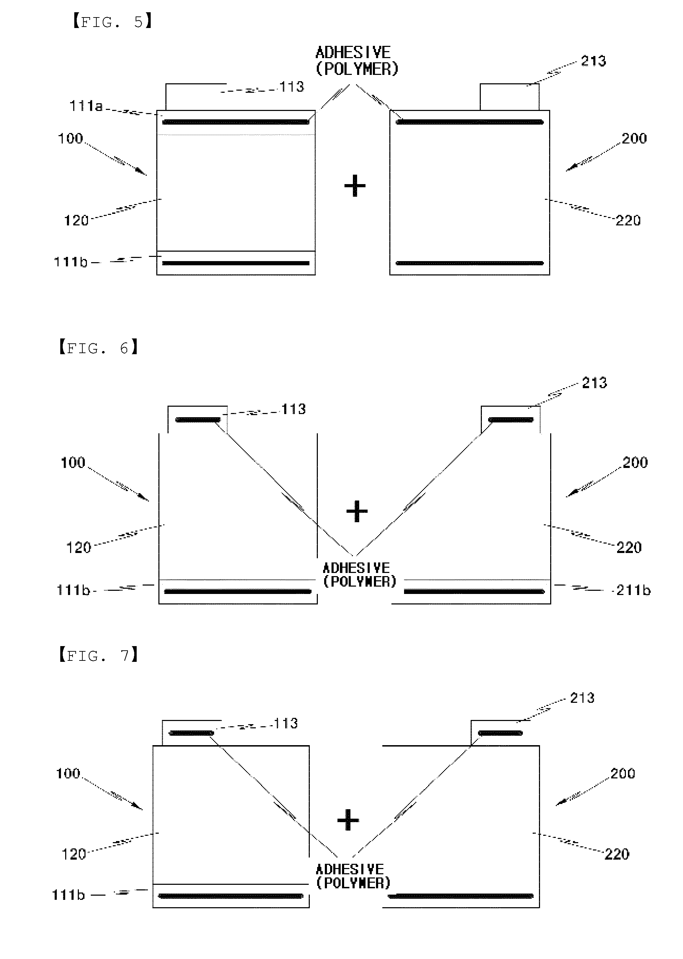

However, as shown in FIG. 2 or 6, also, the negative electrode plate stepped portion 211 may be formed at the negative electrode current collector 210, thereby effectively preventing a decrease in thickness of the battery due to accumulation of the adhesive at the time of manufacture of the battery.

For achieving this, as shown in FIG. 2, portions of the negative electrode current collector 210, to which the adhesive is to be applied, are exposed to form the negative electrode plate stepped portion 211, that is, an upper negative electrode stepped portion 211a and a lower negative electrode stepped portion 211b. Then, the adhesive is applied to the negative electrode plate stepped portion 211, and then the thus obtained negative electrode plates 200 are attached and fixed to the second separator 320 at a predetermined interval.

Alternatively, as shown in FIG. 6, only the lower negative electrode plate stepped portion 211b is formed at the lower end of the negative electrode plate current collector 210, and then, the adhesive is applied to the lower negative electrode stepped portion 211b and the negative electrode tap bonding portion 213, so that the negative electrode 200 can be fixed to the second separator 320 without an increase in thickness of the battery due to the adhesive.

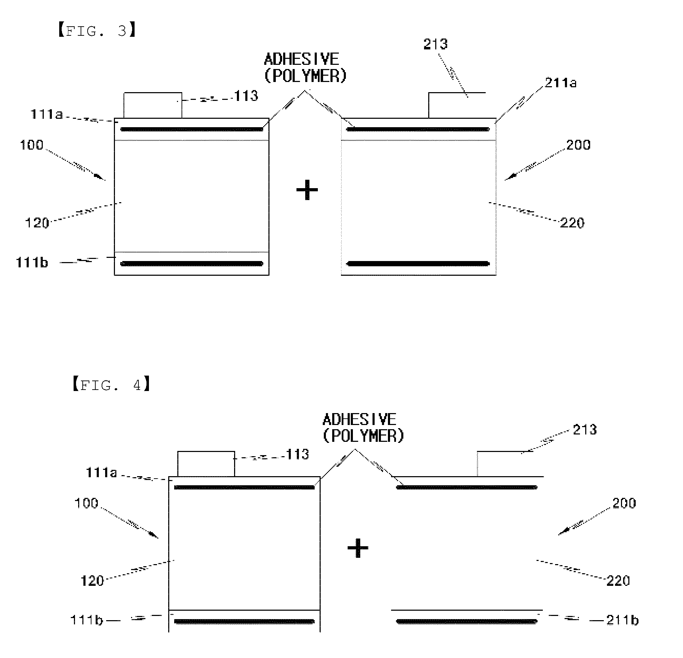

In addition to these, as shown in FIGS. 3 to 5 and 7, any one or both two of the upper end and the lower end of the negative electrode current collector 210 are exposed to selectively form the upper negative electrode stepped portion 211a and the lower negative electrode stepped portion 211b. The positive electrode plate 100 and the negative electrode 200, which are embodied through several embodiments, may be combined to constitute one pair, and thus, various types of electrode assemblies may be manufactured.

Meanwhile, the first separator 310 and the second separator 320 of the present invention may have lengths such that a plurality of electrode plates 100 and 200 can be arranged thereon according to designed capacitance of the battery.

As shown in FIGS. 2 to 7, the positions and the number of electrode plate stepped portions 111 and 211 may be changed through several combinations, thereby variously forming the positive electrode plate 100 and the negative electrode plate 200. At the time of manufacture of the electrode assembly, an increase in thickness of the battery can be more effectively prevented, by making the position of the positive electrode plate stepped portion 111 and the position of the negative electrode plate stepped portion 211 correspond to each other.

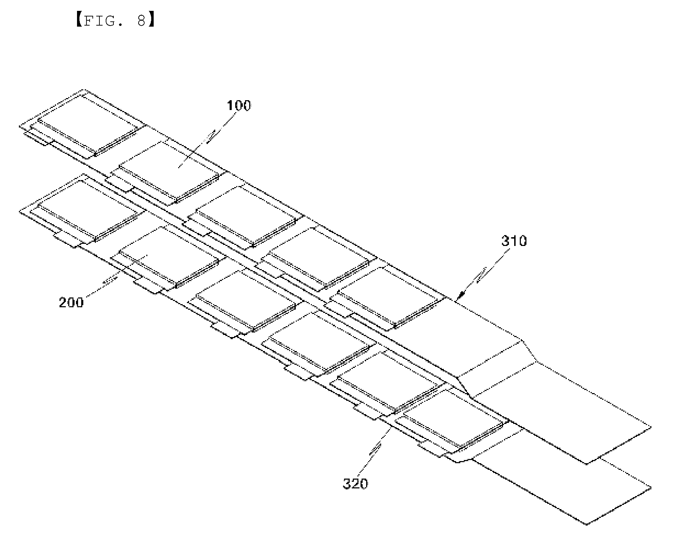

FIGS. 8 to 10 are perspective views schematically showing a procedure for manufacturing an electrode assembly for a battery according to the present invention in a winding type.

As described above, the positive electrode plates 100 and the negative electrode plates 200 are fixed and arranged on the separators 310 and 320, respectively, and thus, as shown in FIGS. 8 to 10, the first separator 310 and the second separator 320 are folded together while they overlap each other above and below in parallel, thereby making it possible to laminate them in a winding type.

Specifically, as shown in FIGS. 8 to 10, the first separator 310 on which the plural positive electrode plates 100 are fixed and arranged overlaps the second separator 320 on which the plural negative electrode plates 200 are fixed and arranged (the positive electrode 100 and the negative electrode plate 200 overlap each other such that they constitute one pair), and then the two separators 310 and 320 are simultaneously wound in one direction to be laminated in a winding type, so that the positive electrode plates 100 and the negative electrode plates 200 are alternately laminated with the separators 310 and 320 therebetween.

In addition, an end of the second separator 320, which is wound at the outermost surface thereof after lamination, is fixed to one side of the second separator 320, by using a fixing member 400 such as, generally, a propylene tape.

Here, preferably, the distance between the positive electrode plates 100 or between the negative electrode plates 200 on each of the separators 310 and 320 becomes gradually increased toward a direction to which the winding of the separators 310 and 320 is heading, considering an increased thickness of the battery as the winding of the separators 310 and 320 becomes headed.

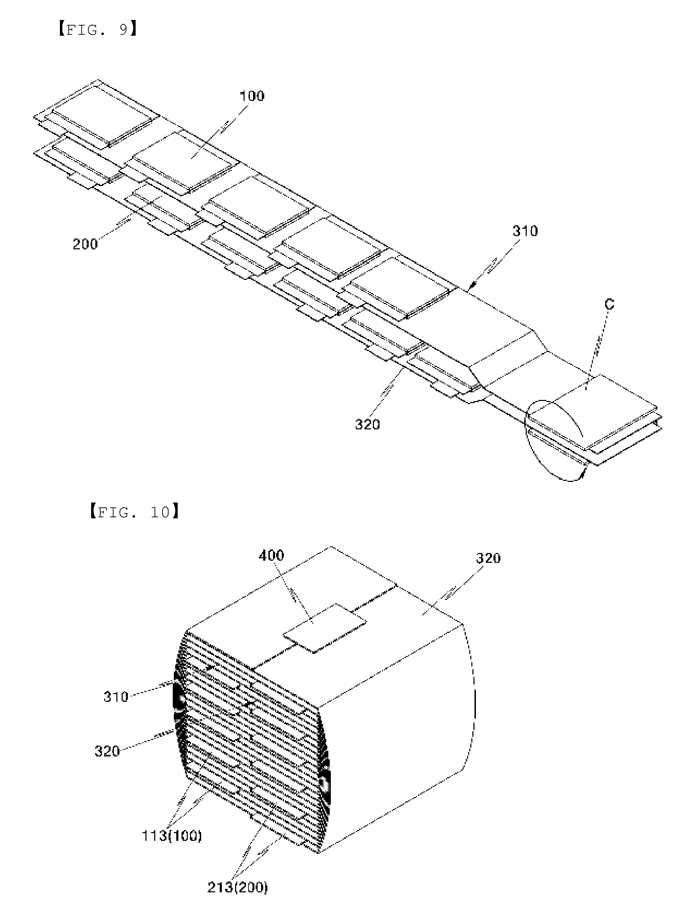

In addition, during the manufacture of the electrode assembly in a winding type as above, in order to wrap the positive electrode plates 100 at the both surfaces thereof by the negative electrode plates 200 at the time of initial winding, the negative electrode plates 200 arranged on the second separator 320 are disposed more forward than the positive electrode plates 100 arranged on the first separator 310 by one plate, as shown in FIG. 9. Hence, at the rear of the separators 310 and 320, the positive electrode plates 100 are disposed more backward than the negative electrode plates 200 by one plate.

As such, when the lamination of the electrode plates 100 and 200 and the separators 310 and 320 is completed, the core (C) may be removed to complete the manufacture of the electrode assembly.

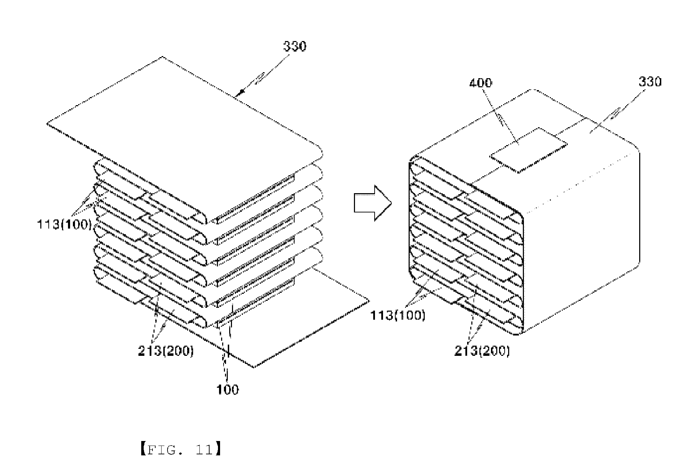

Meanwhile, FIG. 11 is a perspective view showing an electrode assembly manufactured by laminating the separators 330 according to the present invention in a zigzag type.

The electrode assembly for a battery according to the present invention may be manufactured by laminating a sheet of separator 330 in plural layers in a zigzag type while the separator 300 goes back and forth from side to side in plural layers, with the positive electrode plates 100 and the negative electrode plates 200.

Specifically, referring to the embodiment shown in FIG. 11, the positive electrode plate 100 where the adhesive is applied to the positive electrode plate stepped portion 111 is laid on and fixed to the separator 330, and then, the separator 330 is folded at one side thereof so as to wrap the positive electrode plate 100. Then, the negative electrode plate 200 where the adhesive is applied to the negative electrode plate stepped portion 211 is laid on the separator 330 so that it is laminated and fixed above the positive electrode plate 100.

Then, the separator 330 is folded at the other side thereof so as to wrap the negative electrode plate 200. Then, another positive electrode plate 100 to which the adhesive is applied is laid on the separator 330 so that it is laminated and fixed above the negative electrode plate 200.

A multilayer-structure electrode assembly where the positive electrode plates 100 and the negative electrode plates 200 are alternately laminated with the separator 330 therebetween, by repeatedly performing the procedures according to designed capacitance of the battery to be manufactured.

Here, both ends of the separator 330, which are laminated in a zigzag type to wrap the electrode plates, are wound to wrap edges of the electrode plates 100 and 200, which are exposed between laminations of the separator 330 going back and forth from side to side. Then, one side of the separator 330 is usually fixed by using a fixing member 400 such as polypropylene tapes.

In the present invention, the adhesive is partially applied to the negative electrode plate coating layer 220, but there is no interference by foreign substances (adhesives) on the negative electrode 200. In addition, since a portion of the negative electrode plate coating layer 220 to which the adhesive is applied corresponds to the position of the positive electrode plate stepped portion 111 at the time of manufacture of the electrode assembly, substantial charging and discharging are hardly performed at this portion, and thus, wettability with the electrolyte injected in the case for a battery can be maintained itself without being degraded.

Meanwhile, as another embodiment according to the present invention, it is possible to form an electrode assembly where the positive electrode tap bonding portion 113 and the negative electrode tap bonding portion 213 face opposite directions.

As such, according to the present invention, the positive electrode plate 100 and the negative electrode plate 200 are fixed onto the separators 310 and 320 by using the adhesive, thereby to manufacture the electrode assembly for a battery in a winding type, and thus the manufacturing procedure of the battery can be simplified and productivity thereof can be improved.

In addition, since an interference by the adhesive does not occur on the coating layers 210 and 220, particularly the positive electrode plate coating layer 120 on which charging and discharging are realized, performance and stability of the battery can be sufficiently provided.

Further, even in the case where the electrode assembly according to the present invention is prepared by lamination in a zigzag type, to manufacture the battery, the positive electrode plates 100 and the negative electrode plates 200 are not moved on the separator 330, thereby increasing productivity of products and simplifying the manufacturing process, and thus, productivity can be improved.

As described above, although particular preferred embodiments of the present invention are shown and described, the present invention is not limited to these embodiments, and includes all the various embodiments that can be implemented by those skilled in the art, without departing from the scope and spirit of the invention as claimed by claims.

## Claims

1. An electrode assembly for a battery, the electrode assembly comprising:
a plurality of positive electrode plates 100 each having a positive electrode plate stepped portion 111, which is formed by exposing a positive electrode plate current collector 110 to have a stepped portion from a positive electrode plate coating layer 120;
a plurality of negative electrode plates 200;
a first separator 310 for arranging and fixing the plurality of positive electrode plates 100, where an adhesive is applied to the positive electrode plate stepped portions 111, thereon, the positive electrode plates 100 being spaced apart from each other; and
a second separator 320 for arranging and fixing the plurality of negative electrode plates 200 thereon, the negative electrode plates 200 being spaced apart from each other,
wherein the first separator 310 and the second separator 320 are wound in one direction while they overlap each other above and below, so that the negative electrode plates 200 and the positive electrode plates 100 are alternately laminated with the separators 310 and 320 each interposed therebetween.

2. An electrode assembly for a battery, in which a sheet of separator 330 is developed to go back and forth from side to side so as to be laminated in plural layers, and
negative electrode plates 200 and positive electrode plates 100 are alternately laminated with the separator 330 interposed therebetween and fixed to the separator 330, the positive electrode plate 100 having a positive electrode plate stepped portion 111, which is formed by exposing a positive electrode plate current collector 110 to have a stepped portion from a positive electrode plate coating layer 120, while an adhesive is applied to the positive electrode plate stepped portion 111, thereby to prevent an increase in thickness of the battery.

3. The electrode assembly of claim 1 or 2 wherein the positive electrode plate stepped portion 111 is formed at a lower end of the positive electrode plate current collector 110.

4. The electrode assembly of claim 1 or 2, wherein the positive electrode plate stepped portion 111 is formed at both of an upper end and a lower end of the positive electrode plate current collector 110.

5. The electrode assembly of claim 1 or 2, wherein the negative electrode plate stepped portion 211 is formed by exposing the negative electrode plate current collector 210 of the negative electrode plate 200 to have a stepped portion from the negative electrode plate coating layer 220, and the adhesive is applied to the negative electrode plate stepped portion 211.

6. The electrode assembly of claim 5, wherein the negative electrode plate stepped portion 211 is formed at one or both of the upper end and the lower end of the negative electrode plate current collector 210.

7. The electrode assembly of claim 1, wherein a distance between the positive electrode plates 100 or between the negative electrode plates 200 arranged on the first separator 310 and the second separator 320 becomes gradually increased toward a direction to which the winding of the first separator 310 and the second separator 320 is heading

8. A method for manufacturing an electrode assembly for a battery, the method comprising:
providing a plurality of positive electrode plates 100 each having a positive electrode plate stepped portion 111, which is formed by exposing a portion of a positive electrode plate current collector 110 to have a stepped portion from a positive electrode plate coating layer 120;
providing a plurality of negative electrode plates 200;
fixing the plurality of positive electrode plates 100 onto a first separator 310 while the positive electrode plates 100 are arranged to be spaced apart from each other;
fixing the plurality of negative electrode plates 200 onto a second separator 320 while the negative electrode plates 200 are arranged to be spaced apart from each other; and
winding the first separator 310 and the second separator 320 in one direction while they overlap each other above and below, to alternately laminate the negative electrode plates 200 and the positive electrode plates 100,
wherein an adhesive is applied to the positive electrode plate stepped portion 111, thereby to prevent an increase in thickness of the battery.

9. A method for manufacturing an electrode assembly for a battery, in which a sheet of separator 330 is developed to go back and forth from side to side to be laminated in plural layers, and
negative electrode plates 200 and positive electrode plates 100 are alternately laminated with the separator 330 interposed therebetween, the positive electrode plate 100 having a positive electrode plate stepped portion 111, which is formed by exposing a positive electrode plate current collector 110 to have a stepped portion from a positive electrode plate coating layer 120, while an adhesive is applied to the positive electrode plate stepped portion 111, and thereby to prevent an increase in thickness of the battery.

10. The method of claim 8 or 9, wherein the positive electrode plate stepped portion 111 is formed at a lower end of the positive electrode plate current collector 110.

11. The method of claim 8 or 9, wherein the positive electrode plate stepped portion 111 is formed at both of an upper end and a lower end of the positive electrode plate current collector 110.

12. The method of claim 8 or 9, wherein the negative electrode plate stepped portion 211 is formed by exposing the negative electrode plate current collector 210 of the negative electrode plate 200 to have the stepped portion from the negative electrode plate coating layer 220, and the adhesive is applied to the negative electrode plate stepped portion 211.

13. The method of claim 12, wherein the negative electrode plate stepped portion 211 is formed at one or both of the upper end and the lower end of the negative electrode plate current collector 210.

14. The method of claim 8, wherein a distance between the positive electrode plates 100 or between the negative electrode plates 200 arranged on the first separator 310 and the second separator 320 becomes gradually increased toward a direction to which the winding of the first separator 310 and the second separator 320 is heading
